# EUROPÄISCHE PATENTANMELDUNG

(11) **EP 3 103 858 A1**
(43) Veröffentlichungstag der Anmeldung: **14.12.2016**
(21) Anmeldenummer: 15400021.0
(22) Anmeldetag: 08.06.2015
(51) Int. Cl.: C10G 21/18, C10K 1/00, C10C 1/00, C10G 1/04, C10G 2/00

(54) **VERFAHREN ZUR WÄSCHE ORGANISCHER FLÜSSIGKEITEN MIT EINER AUS FLUORKOHLENSTOFF BESTEHENDE FLÜSSIGKEIT**

(71) Anmelder: L'Air Liquide Société Anonyme pour l'Etude et l'Exploitation des Procédés Georges Claude, 75007 Paris (FR)
(72) Erfinder: Sivasubramaniam, Varatharajan, 74219 Möckmühl (DE); Surup, Gerrit, 34346 Hann. Münden (DE); Tang, Xiaoliang, 60388 Frankfurt am Main (DE)
(74) Vertreter: Dropsch, Holger

(57) **Zusammenfassung**

Waschverfahren zur Abtrennung von Feststoffpartikeln aus organischen Flüssigkeiten, umfassend die Verfahrensschritte, wobei die Waschflüssigkeit aus Fluorkohlenstoff besteht und so ausgewählt ist, dass sie mit der zu organischen Flüssigkeit nicht mischbar ist und so, dass das spezifische Gewicht der Waschflüssigkeit größer als das der organischen Flüssigkeit und kleiner als das der Feststoffpartikel ist.

## Beschreibung

### Gebiet der Erfindung

Die Erfindung betrifft ein Waschverfahren zur Abtrennung von Feststoffpartikeln aus organischen Flüssigkeiten, umfassend die Verfahrensschritte:
a) Bereitstellen der zu waschenden, organischen Flüssigkeit,
b) Bereitstellen der Waschflüssigkeit, wobei diese so ausgewählt ist, dass sie mit der zu organischen Flüssigkeit nicht mischbar ist und so, dass das spezifische Gewicht der Waschflüssigkeit größer als das der organischen Flüssigkeit und kleiner als das der Feststoffpartikel ist,
c) In Kontakt bringen der organischen Flüssigkeit und der Waschflüssigkeit,
d) Überführung der Feststoffpartikel aus der organischen Flüssigkeit in die Waschflüssigkeit durch Schwerkraft oder Fliehkraft,
e) Trennung der organischen Flüssigkeit und der Waschflüssigkeit,
f) Abtrennung der Feststoffpartikel aus der Waschflüssigkeit,
g) Rückführung der Waschflüssigkeit nach Schritt c).

Die Erfindung betrifft außerdem die Verwendung des Verfahrens zur Wäsche folgender organischer Flüssigkeiten oder Gemische:
- der bei der Pyrolyse von Biomasse oder Kohle entstandenen, aus Schwelteer und Pyrolyseöl bestehenden Kondensatphase,
- der beim Fischer-Tropsch-Verfahren entstandenen Wachsphase,
- des beim Methanol-to-Propylen-Verfahren entstandenen MeOH/DME/Wasser-Gemischs,
- der beim Methanol-to-Propylen-Verfahren entstandenen Olefin/Paraffin-Mischung,
- der beim Fischer-Tropsch-Verfahren entstandenen aliphatischen Paraffine und der paraffinischen Kohlenwasserstofffraktion.

### Stand der Technik

In zahlreichen Prozessen, wie z. B. bei der Herstellung von Koks aus Kohle, der Herstellung von Synthesegas aus Kohle oder Koks oder der Pyrolyse von biologischem Material, fallen organische Flüssigkeiten, wie Teere und Öle, als wertvolle Produkte oder Nebenprodukte an.

Im Rohzustand sind diese Teere und Öle in vielen Fällen mit Feststoffpartikeln, wie z. B. Aschepartikeln, beladen. Für die weitere Verarbeitung und Verwendung der Teere und Öle müssen in vielen Fällen diese Partikel abgetrennt werden.

Diese Abtrennung der Partikel kann beispielsweise durch Verwendung eines Absetzbeckens erfolgen, wie es bei der Behandlung von bei der Festbettdruckvergasung von kohlenstoffhaltigem Brennstoff entstandenem Gaskondensat der Fall ist. Dabei liegen die Teere und Öle in einer wässrigen Suspension vor und die Feststoffpartikel sinken in Form eines Staubteers auf den Boden des Absetzbeckens, des sogenannten Teerscheiders.

Zur Abtrennung von Feststoffen aus Teer werden aber auch Filter verwendet. So beschreibt die internationale Offenlegungsschrift WO 2012/104686 A1 ein Verfahren, bei dem das aus dem Synthesegas abgetrennte Gaskondensat einer Filtervorrichtung zugeführt wird. In dieser Filtervorrichtung werden die festen Bestandteile, also der aus dem Brennstofffestbett des Vergasungsreaktors mitgerissene Staub, mechanisch aus dem Gaskondensat abgetrennt.

In der Patentschrift EP 0 283 584 B1 wird dagegen die Verwendung einer Zentrifuge zur Abtrennung von Wasser und Feststoffen aus Steinkohlenteer beschrieben. Dem Teer wird dabei, vor Eintritt in die Zentrifuge, Wasser, Demulgatoren, Flockungs- und/oder Verdünnungsmittel zugesetzt.

Bei der Wachsphase, den aliphatischen Paraffinen und der paraffinischen Kohlenwasserstofffraktion die im Fischer-Tropsch-Verfahren gebildet werden, besteht die Aufgabe, Feststoffpartikel, in diesem Fall aus dem im Fischer-Tropsch-Verfahren verwendeten Katalysator stammend, abzutrennen. In der Patentschrift US 6,114,399 wird vorgeschlagen den aus dem Blasenreaktor ausgeleiteten, Katalysatorpartikel enthaltenden Schlamm mit einem überkritischen, kohlenwasserstoffhaltigen Lösungsmittel zu versetzen, wobei die Partikel in das Lösungsmittel übergehen, das dann von dem Schlamm getrennt wird.

In der Anmeldeschrift DE 10 2011 013 470 A1 wird metallhaltiges Kohlenwasserstoffgemisch aus der Fischer-Tropsch-Synthese mit elementarem Schwefel zu vermischen, wobei die Metallpartikel in Metallsulfide umgewandelt werden, die aus dem Kohlenwasserstoffgemisch durch Filtrieren abgetrennt werden können.

In der internationalen Anmeldeschrift WO 98/27181 wird zum Abtrennen von Katalysatorpartikeln aus Fischer-Tropsch-Wachs die Verwendung eines speziellen Abscheiders, eines sogenannten dynamic settlers, vorgeschlagen. Durch scharfe Richtungsänderungen der Wachsströmung in diesem Abscheider werden, unter Ausnutzung der dabei erzeugten Trägheitskräfte, die Partikel aus dem Wachsstrom abgetrennt.

Die Verfahren des Stands der Technik liefern in einigen Fällen hinsichtlich der Trennschärfe keine optimalen Ergebnisse. In einigen Fällen werden kleinere Partikel nicht mit abgeschieden, in anderen Fällen wird mit den Partikeln auch ein relativ großer Teil des Wertstoffs, z.B. des Teers, mit abgeschieden. Einige Verfahren verlangen einen großen technischen Aufwand, z.B. ein großes Absetzbecken, andere sind für große Produktionsanlagen weniger geeignet.

Aufgabe der Erfindung ist es daher, ein Verfahren zur Verfügung zu stellen, das mit vertretbarem technischem Aufwand und mit hoher Trennschärfe in der Lage ist, Feststoffpartikel aus organischen Flüssigkeiten abzutrennen.

### Beschreibung der Erfindung

Die Erfindung löst die Aufgabe gemäß den Angaben und den Merkmalen des Anspruchs 1. Fluorkohlenstoffe sind aliphatische Verbindungen, bei denen alle Wasserstoffatome durch Fluoratome ersetzt sind. Sie sind beispielsweise in Römpps Chemie-Lexikon beschrieben.

Fluorkohlenstoffe werden bereits zur Reinigung von Flüssigkeiten durch Extraktion verwendet. Bekannt ist der Einsatz zur Klärung von Seren und Blutplasma, zur Extraktion von Alkoholen aus wässrigen Lösungen oder zur Extraktion von Pestiziden und Arzneimitteln. In vorliegender Erfindung werden sie nicht als Extraktions- sondern als Waschmittel eingesetzt. Es wird also nicht der Unterschied zwischen der jeweiligen Löslichkeit eines Stoffes in zwei Flüssigkeiten zum Transport des Stoffes von der einen in die andere Flüssigkeit ausgenutzt. Bei der Erfindung besteht die treibende Kraft zum Transport der Partikel von der zu reinigenden organischen Flüssigkeit in die Waschflüssigkeit allein in der Differenz der spezifischen Gewichte.

### Bevorzugte Ausgestaltungen der Erfindung

Eine bevorzugte Ausgestaltung der Erfindung ist dadurch gekennzeichnet, dass die aus Fluorkohlenstoff bestehende Waschflüssigkeit aus folgender Gruppe ausgewählt wird: Perfluortri-N-butylamin, Perfluortripentylamin, Perfluorhexan und Perfluor-N-Alkylmorpholin. Diese Fluorkohlenstoffe sind mit organischen Flüssigkeiten nicht mischbar, sodass sich, nachdem die Flüssigkeiten miteinander in Kontakt gebracht wurden, zwischen ihnen eine enge Phasengrenze ausbildet. Durch Schwerkraft oder Fliehkraft werden dann die Feststoffpartikel von der organischen Flüssigkeit in die Waschflüssigkeit transportiert. Feststoffpartikel, deren spezifisches Gewicht höher als das der Waschflüssigkeit ist, entfernen sich unter dem Einfluss der Schwerkraft oder Fliehkraft von der Phasengrenze. Durch die ausgebildete enge Phasengrenze ist eine Trennung zwischen der organischen Flüssigkeit und der beladenen Waschflüssigkeit mit nur geringen Verlusten an organischer Flüssigkeit möglich.

Eine weitere bevorzugte Ausgestaltung der Erfindung ist dadurch gekennzeichnet, dass das Inkontaktbringen erfolgt, indem die Flüssigkeiten miteinander verrührt werden oder indem sie im Gegenstrom eine Waschkolonne durchlaufen. Auf diese Weise wird die Phasengrenzfläche zwischen den Flüssigkeiten vergrößert und der Übertritt der Feststoffpartikel erleichtert.

Eine weitere bevorzugte Ausgestaltung der Erfindung ist dadurch gekennzeichnet, dass die Schritte d), e) und f) aus Anspruch 1 mit einer Dreiphasendekantierzentrifuge durchgeführt werden. In einer derartigen Zentrifuge werden die zu reinigende organische Flüssigkeit, die Waschflüssigkeit und die Feststoffpartikel voneinander getrennt. Eine Zentrifuge benötigt gegenüber einem Absetzbecken gleicher Kapazität weniger Platz.

### Bevorzugte Verwendungen des erfindungsgemäßen Verfahrens

Das erfindungsgemäße Verfahren kann insbesondere zur Wäsche folgender organischer Flüssigkeiten oder Gemische verwendet werden:
- der bei der Pyrolyse von Biomasse oder Kohle entstandenen, aus Schwelteer und Pyrolyseöl bestehenden Kondensatphase,
- der beim Fischer-Tropsch-Verfahren entstandenen Wachsphase,
- des beim, beispielsweise in der Patentschrift EP 1 289 912 B1 beschriebenen, Methanol-to-Propylen-Verfahrens entstandenen MeOH/DME/Wasser-Gemischs,
- der beim Methanol-to-Propylen-Verfahren entstandenen Olefin/Paraffin-Mischung,
- der beim Fischer-Tropsch-Verfahren entstandenen aliphatischen Paraffine und der paraffinischen Kohlenwasserstofffraktion.

### Ausführungs- und Zahlenbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigt die einzige Figur
- Fig. 1: ein Fließschema einer beispielhaften Ausführung eines Verfahrens zur Herstellung von Pyrolyseprodukten aus lignocellulosehaltiger Biomasse,
- Fig. 2: ein Fließschema einer beispielhaften Ausführung des erfindungsgemäßen Verfahrens.

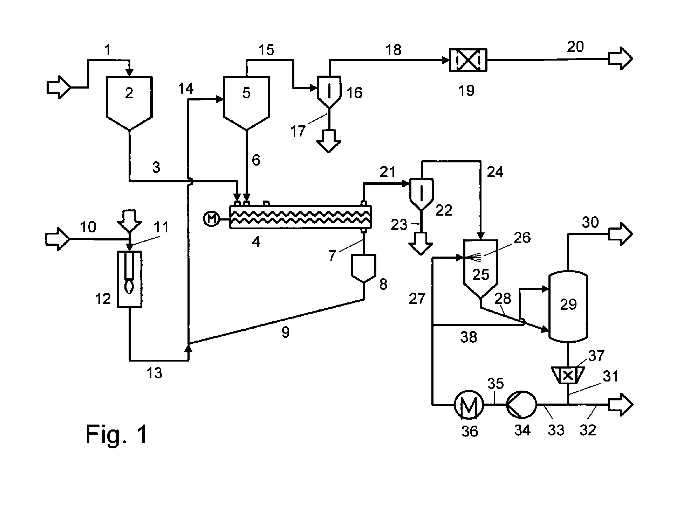

Im Verfahren der Fig. 1 wird über Leitung 1 Biomasse in förderfähiger Form in das Silo 2 gefördert und dort zwischengelagert. Rohstoff des Verfahrens kann prinzipiell jede Art trockener, insbesondere lignocellulosehaltiger Biomasse sein, die durch Nutzung von Reststoffen aus der Agrar- und Forstwirtschaft sowie der Landschaftspflege anfällt. Im vorliegenden Ausführungsbeispiel wird getrocknetes und zerkleinertes Stroh als Biomasse eingesetzt.

Aus dem Silo 2 wird die Biomasse über Leitung 3 unter Verwendung bildlich nicht dargestellter Förder-, Dosierungs- und ggf. Zwischenlagerungsvorrichtungen dem Pyrolysereaktor 4 aufgegeben. Bei diesem handelt es sich um einen an sich bekannten Doppelschneckenreaktor mit zwei parallel zueinander angeordnet gleichsinnig drehenden und dabei ineinander greifenden Förderschnecken. Durch diesen Reaktoraufbau wird ein kontinuierlicher Biomassefluss durch den Reaktor und somit definierte Verweilzeiten von wenigen Sekunden, typischerweise zwischen 0,1 und 10 s, bevorzugt zwischen 1 bis 2 s, bei Pyrolysebedingungen gewährleistet. Gleichzeitig erfolgt eine intensive Vermischung der Biomasse mit dem als Wärmeträger verwendeten, vorerhitzten Sand, der aus einem Vorratsbehälter 5 entnommen und über Leitung 6 dem Pyrolysereaktor 4 aufgegeben wird. Hierdurch stellt sich eine Pyrolysetemperatur von ca. 500 °C ein.

Nach Durchlaufen des Pyrolysereaktors 4 wird ein Teil der festen Reaktionsprodukte (Pyrolysekoks) sowie der abgekühlte Wärmeträger über Leitung 7 unter Verwendung bildlich nicht dargestellter Fördervorrichtungen aus dem Pyrolysereaktor ausgeleitet, in dem Zwischenbehälter 8 gelagert und über Leitung 9 weitergeführt. Über Leitungen 10 und 11 werden ein gasförmiger Brennstoff und Verbrennungsluft zum Brenner 12 geführt und dort verbrannt. Als gasförmiger Brennstoff wird rückgeführtes Pyrolysegas und/oder Erdgas verwendet. Das dabei erzeugte Rauchgas wird über Leitung 13 aus dem Brenner ausgeleitet und mit den über Leitung 9 herangeführten Feststoffen vereinigt. Hierdurch erfolgt die Wiederaufheizung des Wärmeträgers sowie sein pneumatischer Transport über Leitung 14 zurück in den Vorratsbehälter 5, wodurch er für einen erneuten Einsatz im Pyrolysereaktor zur Verfügung steht.

Über Leitung 15 wird das teilweise abgekühlte Rauchgas aus dem Vorratsbehälter 5 ausgeleitet. Es enthält noch einen signifikanten Anteil an Feststoffen, insbesondere Pyrolysekoks. Die Feststoffe werden im Zyklon 16 abgeschieden und über Leitung 17 der bildlich nicht dargestellten Koksaufbereitung zugeführt. Über Leitung 18 wird das teilweise von Feststoffanteilen befreite Rauchgas einem Filter 19 zugeführt, in dem eine weitere Feststoffabscheidung erfolgt. Über Leitung 20 wird das weitgehend von Feststoffen befreite Rauchgas der Abgasentsorgung zugeführt.

Über Leitung 21 werden die gas- und dampfförmigen Pyrolyseprodukte aus dem Pyrolysereaktor ausgeleitet und einem Zyklon 22 zugeführt. In diesem erfolgt eine Abtrennung mitgerissener Feststoffe, insbesondere von Pyrolysekoks, der über Leitung 23 der bildlich nicht dargestellten Koksaufbereitung zugeführt wird. Über Leitung 24 werden die teilweise von Feststoffen befreiten gas- und dampfförmigen Pyrolyseprodukte der Abkühlvorrichtung 25 zugeführt, die als Quench, gefolgt von einem bildlich nicht dargestellten, mehrstufigen Kondensator ausgestaltet ist. Als Kühlmittel in dem mehrstufigen Kondensator dienen Pyrolyseteer und wässriges Pyrolyseprodukt. Da seit dem Verlassen des Pyrolysereaktors noch keine signifikante Abkühlung erfolgte, beträgt die Eintrittstemperatur der gas- und dampfförmigen Pyrolyseprodukte in die Abkühlvorrichtung immer noch rund 500 °C.

In der Abkühlvorrichtung erfolgt eine Abkühlung der heißen, gas- und dampfförmigen Pyrolyseprodukte im direkten Wärmetausch gegen eingedüsten Pyrolyseteer als Kühlmittel, der eine Temperatur von rund 80 bis 90 °C aufweist, über Leitung 27 der Abkühlvorrichtung zugeführt und ebenfalls über eine geeignete Verteilungsvorrichtung 26, beispielsweise eine Düse, aufgegeben wird. Nachfolgend erfolgt eine weitere Abkühlung im mehrstufigen Kondensator im indirekten Wärmetausch gegen Pyrolyseteer mit einer Temperatur von rund 80 bis 90 °C und gegen wässriges Pyrolyseprodukt mit einer Temperatur von rund 20 bis 30 °C.

Durch die mehrstufige Abkühlung erfolgt eine Kondensation und Phasentrennung der dampfförmigen Pyrolyseprodukte und es scheidet sich der Pyrolyseteer ab, der noch einen geringen Feststoffanteil enthält. Der Pyrolyseteer und die verbliebenen gasförmigen Pyrolyseprodukte, das Pyrolysegas, verlassen über Leitung 28 die Abkühlvorrichtung 25 und werden in eine Phasentrennvorrichtung 29 eingeleitet. In dieser erfolgt die weitere Abkühlung und Trennung des Pyrolyseteers von dem Pyrolysegas mittels über Leitung 38 zugeführten Pyrolyseteers als Kühlmittel. Das Pyrolysegas wird dann über Leitung 30 ausgeleitet und über Leitung 10 mindestens teilweise als gasförmiger Brennstoff zum Brenner 12 zurückgeführt. Da das Pyrolysegas noch eine erhebliche Menge an Wasser enthalten kann, wird es vor der Rückführung zum Brenner optional einer weiteren, nicht bildlich dargestellten Phasentrennvorrichtung zugeführt, in der Wasser abgetrennt wird. Letzteres kann, wie oben dargestellt, ebenfalls als Kühlmittel verwendet werden.

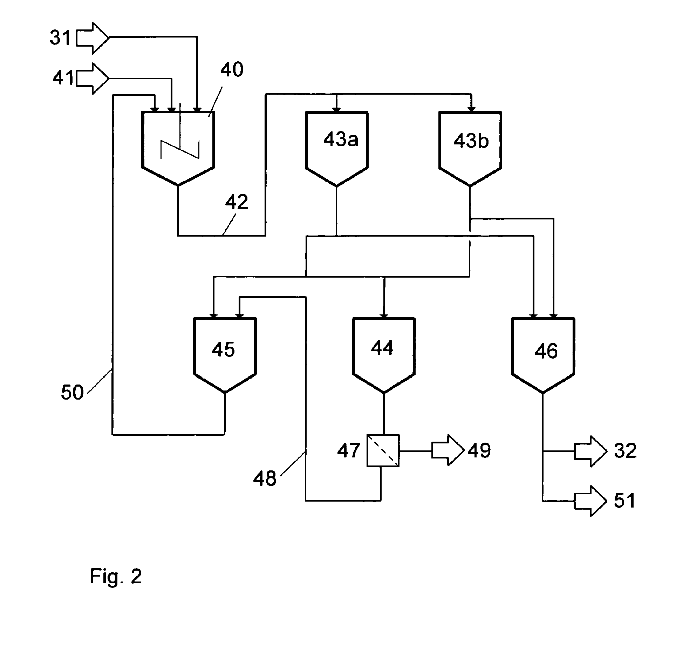

Der noch einen geringen Feststoffanteil enthaltende Pyrolyseteer wird über Leitung 31 aus der Phasentrennvorrichtung 29 abgeführt und dem in Fig. 2 dargestellten, erfindungsgemäßen Verfahren, zur Abtrennung der noch enthaltenen Feststoffanteile zugeführt. Über Leitung 32 wird ein Anteil des im in Fig. 2 dargestellten, erfindungsgemäßen Verfahren von Feststoffanteilen gereinigten Pyrolyseteers mittels einer Pumpe 34 über Leitungen 33 und 35 einem Wärmetauscher 36 zugeführt, dort auf eine Temperatur von rund 90 °C abgekühlt und anschließend über Leitung 27 und Leitung 38 zu der Abkühlvorrichtung als Kühlmittel zurückgeführt.

In Fig. 2 wird über Leitung 31 der in dem in Fig. 1 dargestellten Verfahren gewonnene, noch mit einem Feststoffanteil beladene Pyrolyseteer dem Mischbehälter 40 zugeführt. Außerdem wird dem Mischbehälter über Leitung 41 eine aus Fluorkohlenstoff bestehende Waschflüssigkeit zugeführt. Das im Mischbehälter 40 erzeugte Gemisch wird über Leitung 42 den Absetzbehältern 43 a und 43 b zugeführt. In den Absetzbehältern werden die Phasen des Pyrolyseteers und der Waschflüssigkeit durch die Einwirkung der Schwerkraft in eine obere, aus Pyrolyseteer bestehende und eine untere, aus der Waschflüssigkeit bestehende Phase getrennt. Gleichzeitig gehen, ebenfalls unter dem Einfluss der Schwerkraft, die Feststoffe aus der Teerphase in die Waschflüssigkeitsphase über und sammeln sich am Boden des bzw. der Absetzbehälter. Nachdem die Phasentrennung und das Absinken der Feststoffe in den Bodenbereich des Absetzbehälters abgeschlossen ist, wird aus dem Absetzbehälter zunächst der mit Feststoffen beladene Teil der Waschflüssigkeit aus dem Bodenbereich des Absetzbehälters über Rohrleitungen in den Sammelbehälter 44 abgelassen. Dann wird der obere Bereich der Waschflüssigkeitsphase über Rohrleitungen in den Sammelbehälter 45 abgelassen und anschließend wird die von Feststoffen befreite Pyrolyseteerphase in Sammelbehälter 46 abgelassen. Die mit den Feststoffen beladene Waschflüssigkeit aus Sammelbehälter 44 wird in Filter 47 von den Feststoffen befreit und über Leitung 48 dem Sammelbehälter 45 zugeführt. Die im Filter 47 abgetrennten Feststoffe werden als Strom 49 der weiteren Behandlung, außerhalb des Verfahrens, zugeführt. Die in Behälter 45 gesammelte Waschflüssigkeit wird über Leitung 50, zur Wiederverwendung, dem Mischbehälter 40 zugeführt. Der in Behälter 46 gesammelte, von Feststoffen befreite Pyrolyseteer wird zum einen Teil, über Leitung 32, für die Verwendung als Kühlmittel, dem in Fig. 1 dargestellten Verfahren zugeführt und zum anderen Teil, über Leitung 51, als Verfahrensprodukt zur weiteren Verwendung aus dem Verfahren ausgeleitet.

### Gewerbliche Anwendbarkeit

Die Erfindung stellt ein wirksames und kostengünstiges Verfahren zur Reinigung von Wertstoffen, wie beispielsweise Teere und Öle dar, und ist damit gewerblich anwendbar.

### Bezugszeichenliste

- 1: Leitung
- 2: Silo
- 3: Leitung
- 4: Pyrolysereaktor
- 5: Vorratsbehälter
- 6: Leitung
- 7: Leitung
- 8: Zwischenbehälter
- 9: Leitung
- 10: Leitung
- 11: Leitung
- 12: Brenner
- 13: Leitung
- 14: Leitung
- 15: Leitung
- 16: Zyklon
- 17: Leitung
- 18: Leitung
- 19: Filter
- 20: Leitung
- 21: Leitung
- 22: Zyklon
- 23: Leitung
- 24: Leitung
- 25: Abkühlvorrichtung
- 26: Verteilungsvorrichtung
- 27: Leitung
- 28: Leitung
- 29: Phasentrennvorrichtung
- 30: Leitung
- 31: Leitung für mit Feststoff beladenen Pyrolyseteer
- 32: Leitung für feststofffreien Pyrolyseteer
- 33: Leitung
- 34: Pumpe
- 35: Leitung
- 36: Wärmetauscher
- 37: Nicht besetzt
- 38: Leitung
- 39: Nicht besetzt
- 40: Mischbehälter
- 41: Waschmittel, frisch
- 42: Leitung
- 43: a, b Absetzbehälter
- 44: Sammelbehälter
- 45: Sammelbehälter
- 46: Sammelbehälter
- 47: Filter
- 48: Leitung
- 49: Abgetrennte Feststoffe
- 50: Leitung
- 51: Gereinigter Pyrolyseteer zur weiteren Verwendung

## Patentansprüche

1. Waschverfahren zur Abtrennung von Feststoffpartikeln aus organischen Flüssigkeiten, umfassend die Verfahrensschritte:
a) Bereitstellen der zu waschenden, organischen Flüssigkeit,
b) Bereitstellen der Waschflüssigkeit, wobei diese so ausgewählt ist, dass sie mit der organischen Flüssigkeit nicht mischbar ist und so, dass das spezifische Gewicht der Waschflüssigkeit größer als das der organischen Flüssigkeit und kleiner als das der Feststoffpartikel ist,
c) Inkontaktbringen der organischen und der Waschflüssigkeit,
d) Überführung der Feststoffpartikel aus der organischen Flüssigkeit in die Waschflüssigkeit durch Schwer- oder Fliehkraft,
e) Trennung der organischen und der Waschflüssigkeit,
f) Abtrennung der Feststoffpartikel aus der Waschflüssigkeit,
g) Rückführung der Waschflüssigkeit nach Schritt c),
**dadurch gekennzeichnet, dass** als Waschflüssigkeit eine aus Fluorkohlenstoff bestehende Flüssigkeit verwendet wird.

2. Verfahren gemäß Anspruch 1, **dadurch gekennzeichnet, dass** die aus Fluorkohlenstoff bestehende Waschflüssigkeit aus folgender Gruppe ausgewählt wird: Perfluortri-N-butylamin, Perfluortripentylamin, Perfluorhexan und Perfluor-N-Alkylmorpholin.

3. Verfahren gemäß Anspruch 1 oder 2, **dadurch gekennzeichnet, dass** das Inkontaktbringen erfolgt, indem die Flüssigkeit miteinander verrührt werden oder indem sie im Gegenstrom eine Waschkolonne durchlaufen.

4. Verfahren gemäß Anspruch 1 oder 2, **dadurch gekennzeichnet, dass** die Schritte d), e) und f) aus Anspruch 1 mit einer Dreiphasendekantierzentrifuge durchgeführt werden.

5. Verwendung der Verfahren gemäß der vorhergehenden Ansprüche zur Wäsche folgender organischer Flüssigkeiten oder Gemische:
- der bei der Pyrolyse von Biomasse oder Kohle entstandenen, aus Schwelteer und Pyrolyseöl bestehenden Kondensatphase
- der beim Fischer-Tropsch-Verfahren entstandenen Wachsphase
- des beim Methanol-to-Propylen-Verfahrens entstandenen MeOH/DME/Wasser-Gemischs
- der beim Methanol-to-Propylen-Verfahren entstandenen Olefin/Paraffin-Mischung
- der beim Fischer-Tropsch-Verfahren entstandenen aliphatischen Paraffine und der paraffinischen Kohlenwasserstofffraktion.
